(19) **Europäisches Patentamt**
**European Patent Office**
**Office européen des brevets**

(11) **EP 4 052 995 B1**

(12) **EUROPEAN PATENT SPECIFICATION**

(45) Date of publication and mention
of the grant of the patent:
**10.01.2024 Bulletin 2024/02**

(51) International Patent Classification (IPC):
**B62D 15/02** $^{(2006.01)}$

(21) Application number: **21161076.1**

(52) Cooperative Patent Classification (CPC):
**B62D 15/025; B62D 15/0265**

(22) Date of filing: **05.03.2021**

(54) **ASSISTIVE TORQUE CALCULATION METHOD AND SYSTEM, PROGRAM, STORAGE MEDIUM, AND VEHICLE**

UNTERSTÜTZENDES DREHMOMENTBERECHNUNGSVERFAHREN UND -SYSTEM, PROGRAMM, SPEICHERMEDIUM UND FAHRZEUG

PROCÉDÉ ET SYSTÈME DE CALCUL DE COUPLE D'ASSISTANCE, PROGRAMME, SUPPORT DE STOCKAGE ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2022 Bulletin 2022/36**

(73) Proprietor: **TOYOTA JIDOSHA KABUSHIKI KAISHA**
**TOYOTA-SHI, AICHI-KEN 471-8571 (JP)**

(72) Inventors:
• **LAZCANO, Andrea**
**1140 BRUSSELS (BE)**
• **CARRERA AKUTAIN, Xabier**
**1140 BRUSSELS (BE)**

(74) Representative: **Cabinet Beau de Loménie**
**158, rue de l'Université**
**75340 Paris Cedex 07 (FR)**

(56) References cited:
**US-B2- 9 278 713**

• **OKAMOTO KAZUHIDE ET AL: "A Comparative Study of Data-Driven Human Driver Lateral Control Models", 2018 ANNUAL AMERICAN CONTROL CONFERENCE (ACC), AACC, 27 June 2018 (2018-06-27), pages 3988-3993, XP033387603, DOI: 10.23919/ACC.2018.8431446 [retrieved on 2018-08-09]**

**Description**

FIELD OF THE DISCLOSURE

The present disclosure concerns the calculation of the value of an assistive torque applied to the steering column of a vehicle by an Advanced Driver Assistance System (ADAS), in addition to the torque applied by the driver of the vehicle him- or herself during driving.

BACKGROUND OF THE DISCLOSURE

An ADAS refers herein to an Advanced Driver Assistance System. Such systems aim to increase safety and to reduce the mental workload of the driver during driving.

Among ADAS, some systems include a function of applying an additional torque to the steering column during driving, to facilitate driving.

In this case, the driving authority is shared between the driver and the ADAS. Since the torque applied by the driver is unknown, it is difficult to determine the optimal or even a proper value for the assistive torque. In some embodiments, the assistive torque applied by the ADAS has been found to be too weak; in others, too strong; the value of the assistive torque has also been found to be inconsistent.

In addition, it can sometimes oppose the driver intention, and this conflict can be perceived as intrusive and unnatural, which results in sub-optimal guidance and reduced driver comfort.

Accordingly, there is still a need for a calculation method which would provide consistently proper values for the assistive torque applied by an ADAS to the steering column of the vehicle, thereby significantly increasing tracking performance and safety as well as increasing the pleasure of driving for the driver.

An assistive driver torque calculation method for calculating an assistive torque to be applied to a steering unit of a vehicle in addition to a driver torque, using Model Predictive Control (MPC), is disclosed by document US 9,278,713 B2. US 9 278 713 B2 shows in particular the features of the preamble of claim 1.

In addition, the references below disclose systems and methods that have been developed in the field of assistive torque calculation or merely driver torque estimation or modelling.

References:

[1] T. Niu and D. Cole, "A model of driver steering control incorporating steering torque feedback and state estimation" Department of Engineering, University Cambridge, Tech. Rep., 2020, Technical Report ENG-TR 005.

[2] C. J. Nash and D. J. Cole, "Identification and validation of a driver steering control model incorporating human sensory dynamics" Vehicle System Dynamics, vol. 58, no. 4, pp. 495-517, 2020. Report ENG-TR 005.

[3] R. S. Sharp and V. Valtetsiotis, "Optimal preview car steering control" Vehicle System Dynamics, vol. 35, pp. 101-117, 2001.

[4] Wang, L. "Model Predictive Control System Design and Implementation Using MATLAB®". Springer, London, 2009.

[5] Rajamani, R. "Vehicle dynamics and control". New York: Springer, 2012.

DISCLOSURE OF THE INVENTION

In order to address the above-described problems of existing assistive torque calculation methods, the method defined by claim 1 is proposed. This method is a computer-implemented assistive torque calculation method for calculating an assistive torque to be applied to a steering unit of a vehicle by a driver assistance system (ADAS) of the vehicle, in addition to a driver torque applied to the steering unit by a driver of the vehicle.

This method comprises the steps of:

S12) determining optimal values of the assistive torque over a time horizon by minimizing a cost function, based on desired reference system states of the vehicle-driver system at future time point(s), using an MPC solver (Model Predictive Control solver); and

S14) outputting the optimal value determined for the next time point; wherein
the steering torque for orienting wheel(s) of the vehicle results at least from the driver torque and the assistive torque;
the MPC solver determines the optimal values using a prediction unit comprising a driver torque prediction unit and a vehicle behaviour prediction unit;

the driver torque prediction unit being configured to calculate a predicted driver torque based at least on a perceived state $x_{perceived}$ of the vehicle related to a position of the vehicle, and on one or more reference vehicle state(s) of the vehicle at one or more future time points;

the vehicle behaviour prediction unit being configured, based on the predicted driver torque, on a measured driver-steering-vehicle state of the vehicle-driver system for a current time point, and optionally on future reference vehicle state(s) at one or more future time points, to output an estimated driver-steering-vehicle state of the vehicle at the next time point.

In the present document:

- When a noun is written followed by '(s)', it means that the considered object or item can be in the singular or plural form. For instance, the expression 'object(s)' means 'at least one object'. Accordingly, a sentence like 'Object(s) are present' includes the singular form, that is, it encompasses the case where a single object is present.
- a variable X at a time point tk may be interchangeably noted Xk or X(k)
- a function or variable 'based on a value' or 'calculated from a value' means that at least said value is used to calculate the variable or the output of the function (the variable or the output of the function is often also a function of other values).
- a state is a vector.
- a vector 'related' to a variable means that component(s) of the vector are based on the value of said variable. For instance, in the above method, component(s) of the perceived state $x_{perceived}$ are variable(s) based on the position of the vehicle.
- 'minimizing a variable' means minimizing a norm of the variable. It further means either minimizing, or also maximizing the norm of the variable, depending on the context or the implementation.

In the above-defined method, the vehicle-driver system is the system composed of the driver and the vehicle, when the driver is driving the vehicle.

The MPC solver determines the optimal values based on the system state, which describes this system.

The system state is composed of variables calculated by the prediction unit, i.e., by the driver torque prediction unit DTP and the vehicle behaviour prediction unit.

The system state includes at least variable(s) related to the tracking (the successive positions over time) of the vehicle. These positions may include for instance the lateral position of the vehicle relative to the centerline of the lane on which it is moving, and the yaw angle of the vehicle.

The system state may further also include variable(s) related to the driver, such as the driver torque, to capture the intention of the driver.

The driver-steering-vehicle variables are the main variables which describe the physics of the vehicle-driver system.

In the general context of the present disclosure, the driver-steering-vehicle state xdsv may include at least variable(s) related to the position of the vehicle (and derivatives thereof), (e.g. the lateral position and yaw angle of the vehicle), as well as variable(s) related to the steering system coupled to the driver arms (e.g., the steering wheel angle).

The system state comprises at least the driver-steering-vehicle state.

In addition, the vehicle state xv is a vector comprising variable(s) related to the vehicle dynamics: Its position, yaw angle, lateral acceleration, etc.

The yaw angle of the vehicle is herein the angle between the longitudinal direction of the vehicle and a global x-axis (respectively noted $F_X$ and $X_G$ below).

In some embodiments, as component(s) based on the position of the vehicle, the perceived state $x_{perceived}$ may comprise a lateral position of the vehicle relative to a centerline of the lane or road on which it is moving and/or a lateral error between an actual lateral position of the vehicle and a desired reference lateral position of the vehicle.

In some embodiments, the perceived state $x_{perceived}$ may comprise at least one of the yaw angle of the vehicle, and variable(s) related to the driver, such as a muscle angle of arms of the driver.

Advantageously, thanks to the presence of the driver torque prediction unit and the vehicle behavior unit, an accurate prediction of the future system states of the vehicle-driver system can be made by the MPC solver. On this basis, a variety of controls can be performed, making it possible to finely adapt the magnitude of the assistive torque to the individual characteristics of the driver. Consequently, a smooth cooperation between the driver and the driver assistance system (ADAS) can be achieved.

The muscle angle of the arms of the driver has the usual meaning in driver-vehicle dynamics, namely a mathematical one degree-of-freedom representation of the human arms (lumped) pivoting at the shoulder (as used for instance in References [1] and [2]).

In some embodiments, the cost function comprises terms that tends to minimize a difference, over a time horizon, between component(s) of the system state and reference values for said component(s).

In some variants of the above embodiments, the terms of the cost function are based on at least one of the following component(s) of the system state:

- vehicle-related component(s), such as a lateral deviation or a yaw angle of the vehicle,
- driver-comfort related component(s), such as a lateral velocity or a yaw rate of the vehicle,
- driver-activity related component(s), such as the driver predicted torque or a reflex torque applied by the driver to the steering unit, and
- assistive-torque-related component(s).

For each of the component(s) that are taken into account in the cost function, the cost function can be based on the value of the variable, its magnitude and/or its rate of change.

In particular, by taking into account, in the cost function of the MPC solver, terms related to the torque applied by the driver, it is possible to calculate values of the assistive torque which advantageously not only ensure that the vehicle is driven safely, but also to provide an improved driving feeling for the driver, and consequently a better driving experience.

For instance, by minimizing the predicted driver torque, the driver steering effort can be reduced; and by minimizing a calculated reflex torque, an intuitive, comfortable assistance can be provided by the driver assistance system, since the reflex torque is directly linked to the presence of uncertainties and discomfort.

In the assistive torque calculation method according to the present disclosure, the driver torque prediction unit comprises a sensory unit, a cognition unit and a neuromuscular response unit; the sensory unit is configured to calculate the perceived state ($x_{perceived}$) of the vehicle; the cognition unit is configured, based on the perceived state of the vehicle ($x_{perceived}$), to calculate a value $\alpha$ representative of an expected driver torque and a value $\gamma$ representative of an expected muscle angle of the arms of the driver, for the current time point; and the neuromuscular response unit is configured, based on said values $\alpha$ and $\gamma$, and on the current value of the muscle angle ($\Theta a$) of the arms of the driver, to calculate the predicted driver torque at the next time point.

The role of the cognition unit is to predict the value $\alpha$ representative of the expected driver torque which corresponds to the driver behaviour. The neuromuscular response unit accounts for the muscle dynamics of the arms, and the sensory unit takes into account the perception faculties of the driver.

In some variants of the above embodiments, the cognition unit comprises a Kalman filter and an optimal controller.

The Kalman filter is configured, based on the perceived state $x_{perceived}$ of the vehicle at the current time point and on the value $\alpha$ representative of a driver torque expected at a prior time point, to calculate an estimate $\hat{x}_{KF}$ of a state of the vehicle.

The optimal controller is configured, based on the state estimate $\hat{x}_{KF,k}$ at the current time point calculated by the Kalman filter, to calculate a value of the variable $\alpha$ representative of the expected driver torque for the current time point by minimizing a cost function.

In these variants, the optimal controller may be a linear quadratic regulator or a model predictive control.

In these variants, based on the perceived state $x_{perceived}$ of the vehicle, the Kalman filter calculates an estimate $\hat{x}_{KF}$ of the states of the arms-steering-vehicle model, represented in an internal mental representation that the driver has based on experience.

In some embodiments comprising a neuromuscular response unit, the neuromuscular response unit is configured to calculate a value $\alpha_r$ representative of a reflex torque based on the value $\gamma$ representative of an expected muscle angle of the arms of the driver and on the current value of the muscle angle; and to calculate the driver torque at the current time point based on the values $\alpha$ and $\alpha_r$ representative respectively of the expected driver torque and of the reflex torque.

In some embodiments, the cost function is an adaptive cost function with varying weights, and the assistive torque calculation method further comprises:

S30) measuring the actual driver torque;
S40) detecting a difference and/or a sign difference between the actual driver torque and the assistive torque;
S50) updating the varying weights of the cost function when the sign difference has been detected and/or based on the difference between the actual driver torque and the assistive torque.

Thanks to the adaptive cost function defined above, the torque conflicts between the driver torque and the assist torque that may arise can be smoothly tackled by the driver assistance system, and in most cases avoided. These adaptive characteristics of the cost function enhance collaboration and allow for dynamic allocation of the level of control authority between the driver and the driver assistance system.

The present disclosure further encompasses a driver assistance method for assisting a driver of a vehicle, wherein the method comprises iteratively, while the vehicle is being driven by the driver:

S10) calculating a value of an assistive torque by the above-proposed assistive torque calculation method; and
S20) transmitting the calculated value of the assistive torque to a steering unit of the vehicle; and wherein, upon receiving the calculated value of the assistive torque, the steering unit controls an actuator of the steering unit to apply a torque having the calculated value to the steering column of the vehicle, the steering unit being configured so that the driver receives a haptic feedback on the torque applied by the actuator.

The proposed driver assistance method is preferably executed continuously while the vehicle is being driven by the driver.

It can be executed in particular during whole trips, regardless of any alarm signals that are possibly emitted and regardless of the driving circumstances (for instance, regardless of whether the vehicle is moving along a same lane or is performing a lane change).

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the above-defined methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a computer-implemented assistive torque calculation system for calculating an assistive torque to be applied to a steering unit of a vehicle by a driver assistance system of the vehicle; the assistive torque calculation system comprising one or more processors and a computer-readable medium; the computer-readable medium comprising computer instructions stored therein, wherein the instructions, when executed by the one or more processors, cause the one or more processors to carry out the steps of any one of the above-defined assistive torque calculation methods.

The present disclosure also includes an advanced driver assistance system, comprising one or more processors and a computer-readable medium;
the computer-readable medium comprising computer instructions stored therein, wherein the instructions, when executed by the one or more processors, cause the one or more processors to carry out the steps of any one of the above-mentioned driver assistance methods.

The present disclosure can be implemented in any kind of human-driven vehicle. It therefore further includes a vehicle comprising the above-defined assistive torque calculation system or the above-defined advanced driver assistance system.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:

Fig.1 is a schematic representation in top view of a vehicle equipped with an assistive torque calculation system according to the present disclosure;
Fig.2 is a schematic functional representation of the assistive torque calculation system mounted in the vehicle of Fig.1;
Fig.3 is a schematic representation in top view of a scene in which the vehicle of Fig.1 is moving;
Fig.4 is a schematic representation of the assistive torque calculation system mounted in the vehicle of Fig.1; and
Fig.5 is a block diagram representing an embodiment of a driver assistance method for assisting a driver to drive a vehicle according to the present disclosure.

DESCRIPTION OF PREFERRED EMBODIMENTS

An advanced driver assistance system ADAS (hereafter, 'ADAS') comprising an assistive torque calculation system ATCS according to the present disclosure will now be presented.

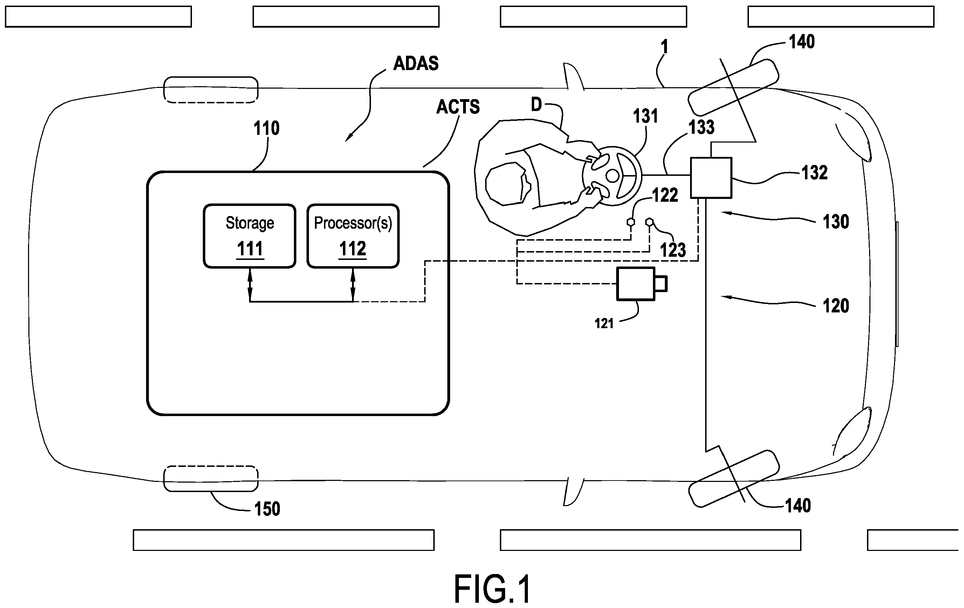

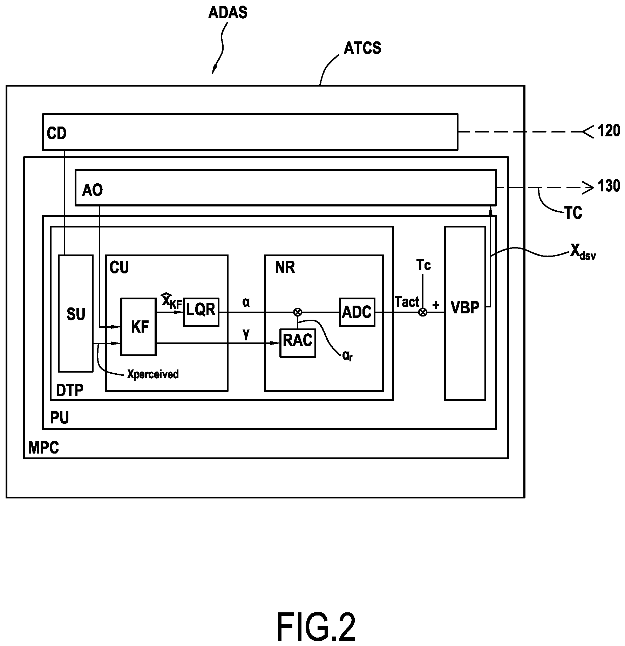

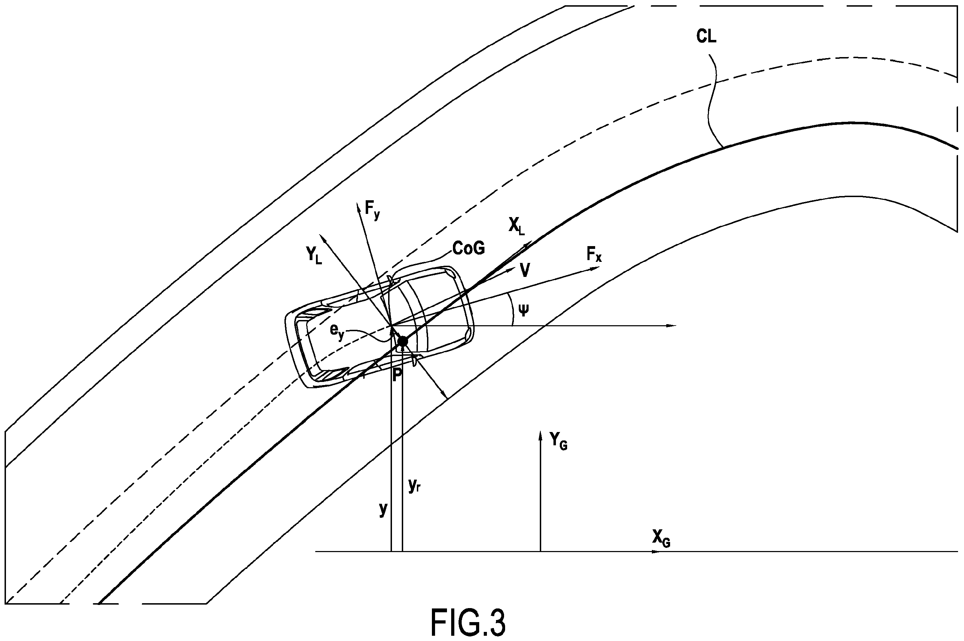

The structure of the ADAS system is illustrated by Fig.1, while its functional units are illustrated by Fig.2. On these figures, ADAS is presented in operation, mounted on a vehicle 1. The vehicle 1 is a car, which represents a non-limiting example of a vehicle on which a system according to the present disclosure can be mounted. The vehicle 1 is represented in Fig.3 moving on a road, more precisely moving on the right lane of the road. The centerline of the lane on which vehicle 1 is moving is noted CL.

GENERAL ARCHITECTURE OF THE ADAS SYSTEM

Material architecture

The vehicle 1 includes the advanced driver assistance system ADAS.

The ADAS system comprises a central driving computer 110 (computer 110'), a set of sensors 120, each sensor being connected to computer 110, a steering unit 130, front wheels 140, rear wheels 150, and various other components.

Most components of the ADAS system are shared components, which are used to perform multiple tasks. That is, the components of the ADAS system perform the functions of the ADAS system, but may also perform other functions in vehicle 1. The ADAS system includes in particular, as mentioned above, an assistive torque calculation system ATCS according to the present disclosure, which is essentially constituted by the computer 110.

Although computer 110 is represented on Fig.1 in a single box, it may comprise one or more processors, and can therefore be a distributed calculation system, distributed over a plurality of processors, possibly physically arranged on different locations.

The steering unit 130 comprises a steering wheel 131, an actuator 132 and a steering column 133.

The set of sensors 120 comprises in particular sensors configured to perceive an external environment of car 1. In this purpose, it comprises several cameras. One of these cameras, the front camera 121 is represented on Fig.1.

The set of sensors 120 further comprises a steering wheel orientation-meter 122, which measures the orientation or angle $\theta$sw of the steering wheel 131, and a torque meter 123 which measures the driver torque $DT_k$ applied by the driver to the steering wheel. In some embodiments, other variables may be measured, in particular the steering column angle $\theta_{sc}$. The values outputted by the wheel orientation meter 122 and by the torque meter 123 are transmitted in real time to computer 110.

During driving, in order to steer car 1, the driver D of car 1 applies a driver torque $DT_k$ (at a time point tk) to the steering wheel 131. At the same time, the ATCS transmits the next desired value of the assistive torque control Tc(k+1) to the actuator 132.

Based on this control, the actuator 132 applies an additional assistive torque having the desired value Tc(k+1) to the steering column 133. The steering column 133, which is also submitted to its own self-aligning torque Tw(k), rotates (or not) to orient the wheels of the vehicle under the cumulated torque resulting from the driver torque DT, the assistive torque Tc and the self-aligning torque Tw, and orients the front wheels 140 accordingly.

The functions (the functional units) of the ADAS system, and in particular of the ACST system, are implemented on the computer 110.

Computer 110 comprises a non-transitory storage medium 111 and one or more processor(s) 112.

The computer 110, in particular in its storage medium 111, stores instructions which when executed by the one or more processor(s) 112 cause the one or more processor(s) 112 to implement the different functional units or functions of the ADAS system, and in particular of the ACST system.

The one or more processors 112 are intended to be representative of the presence of any one or more processors or processing devices, of any of a variety of forms.

A computer program P1 to perform driver assistance tasks and/or driving tasks, which includes in particular a sub-program P11 to calculate an assistive torque, according to the present disclosure, is stored in storage medium 111. This program, and the storage medium 111, are examples respectively of a computer program and a computer-readable recording medium pursuant to the present disclosure.

The storage medium 111 of the computer 110 indeed constitutes a recording medium according to the invention, readable by the one or more processor(s) 112 and on which said program is recorded.

Functional architecture

The ADAS system comprises a central driving unit CD and the ATCS system. The central driving unit CD issues the main driving controls of the vehicle, in particular to control acceleration and/or braking, etc, while the ATCS system calculates the assistive torque controls Tc(k).

Both units are configured to execute programs (in particular programs P1 and P11, for the ATCS system) iteratively at successive loops indexed by an index i. The successive loops i are executed at successive time points ti (i=1.... i=k).

The vehicle-driver model

The controls Tc(k) issued by the ATCS system are calculated not only based on the behavior of the vehicle itself, but rather based on the behavior of the vehicle altogether with its driver. For this reason, the ATCS system includes a model of the 'vehicle-driver', which represents the physics of the vehicle driven by the driver.

While remaining within the scope of the present disclosure, the MPC solver of the ATCS system can use any dynamic model of the 'vehicle-driver system'.

In the present embodiment, this model is represented by two dynamic models: The vehicle model and the steering model.

A. The vehicle model

In the present embodiment the model of the vehicle is the simplified model known as the single-track bicycle model.

The position of the vehicle, in particular its lateral position y, is determined with respect to a first, fixed coordinate systems (axes $X_G$ and $Y_G$ shown on Fig.3).

A second coordinate system ($X_L$, $Y_L$) is defined. This coordinate system is local and is aligned with the lane on which the vehicle is moving.

The origin of this local coordinate system is defined based on the position of the vehicle. For instance, as in the present embodiment, this origin can be the point P of the centreline CL which is closest to the center of mass CoG of the vehicle at the considered time point.

The orientation of this local coordinate system ($X_L$, $Y_L$) is based on the orientation of the road at a point defined based on the position of the vehicle. For instance, as in the present embodiment, the axes ($X_L$, $Y_L$) are oriented based on the orientation of the lane on which the vehicle is moving at point P, so that vector $X_L$ be tangent to the centreline CL at point P.

A third coordinate system ($F_x$, $F_y$) is defined, which is attached to the vehicle: Fx is the vector aligned with the longitudinal, forward direction of the vehicle.

The motion V and the acceleration a of the vehicle are evaluated relative to this third coordinate system ($F_x$, $F_y$).

The vehicle model is based on the equations below, which represent the linearised motion of the vehicle:

$$ma_y = F_{y,f} + F_{y,r}$$

$$I_{zz}\, \ddot{\psi} = l_f\, F_{y,f} - l_r\, F_{y,r}$$

where (in each case, relative to the vehicle) m is the mass; $a_y$ is the lateral acceleration (along the $F_Y$ axis); Fy,f and Fy,r are the forces applied to the vehicle at respectively the front wheels 140 and the rear wheels 150 (i standing for f or r, respectively for the front and the rear axle), in the direction $F_Y$ perpendicular to the hubs of the wheels; $I_{zz}$ is the inertia with respect to the centre of mass; $\psi$ is the heading angle and $\ddot{\psi}$ is its second derivative; and $l_f$ and $l_r$ are the front and rear distance from the centre of gravity CoG.

In addition, in the model, the lateral axle forces Fy,i have a linear relation with respect to the slip angles $\alpha i$, and are calculated as:

$$F_{y,f} = -\, C_{\alpha f,f} \cdot \alpha_f$$

$$F_{y,r} = -\, C_{\alpha r,r} \cdot \alpha_r$$

where $C_{\alpha f,f}$ and $C_{\alpha f,r}$ are tire cornering stiffness coefficients.

In these equations, $\alpha_f$ and $\alpha_r$ represent the lateral tire slip angle and are obtained by:

$$\alpha_f = - \delta + \frac{V_y + l_f \dot{\psi}}{V_x}$$

$$\alpha_r = \frac{V_y - l_r \dot{\psi}}{V_x}$$

where $\dot{\psi}$ is the yaw rate, Vx is the longitudinal velocity, and Vy is the lateral velocity, and $\dot{\psi}$ is the derivative of the heading angle $\psi$.

The vehicle model also can be the vehicle model disclosed by Reference [5].

B. The steering model

In order to accurately calculate the predicted driver torque Tact, a method or system according to the present disclosure preferably includes a detailed steering model, in which the dynamics of the steering takes into account not only the interaction of the driver when he/she steers the vehicle, but also the dynamics of the steering unit itself.

In the vehicle 1 of the present embodiment, the orientation of the front wheels 140 is the result of the different torques applied to the steering column 133: the driver torque DT, the assistive torque Tc and the self-aligning torque Tw.

In embodiments of the proposed methods, and in particular in this embodiment, the steering dynamics is represented by a two-degree-of-freedom model in which the two degrees of freedom are the steering wheel angle θsw and the steering column angle, θsc.

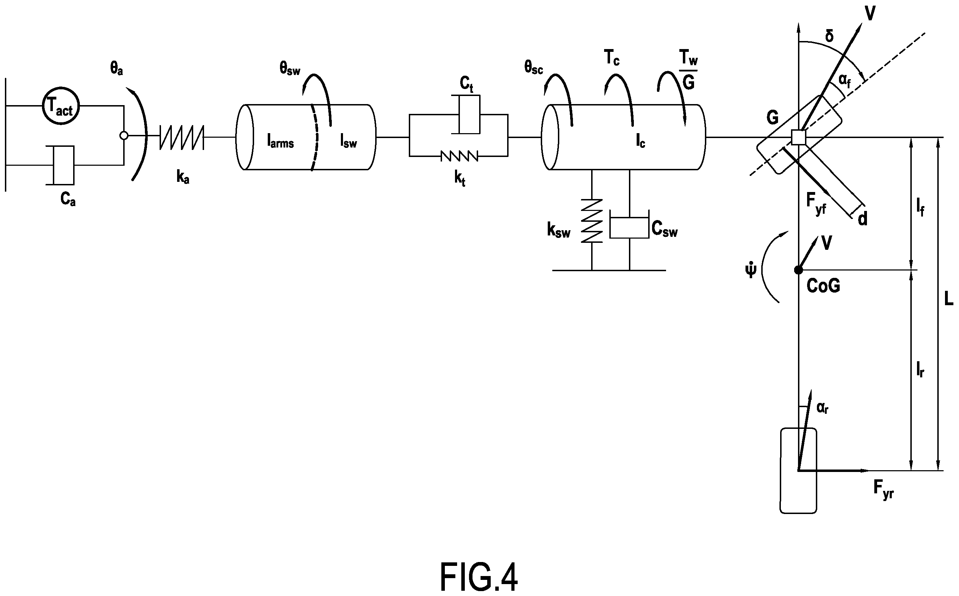

In the present embodiment, the steering model, based on Ref.[1], is represented on the left part of Fig.4.

The difference of the angles of the steering wheel and the steering column at the steering column is defined as $\Delta\Theta_{sc} = \Theta_{sw} - \Theta_c$.

Its derivative is calculated as:

$$\Delta\dot{\theta}_{sc} = ( \dot{\theta}_{sw} - \dot{\theta}_c )$$

The interaction of the driver is taken into account through the introduction of the muscle angle $\Theta_a$ of the arms of the driver, interacting with the steering wheel 121. The dynamic behaviour of the driver steering the steering unit is defined by the equations:

$$( I_{sw} + I_{arms} )\ddot{\theta}_{sw} = k_a ( \theta_a - \theta_{sw}) - c_t \Delta \dot{\theta}_{sc} - k_t \Delta \theta_{sc}$$

$$I_c \ddot{\theta}_c + c_{sw} \dot{\theta}_c + k_{sw} \theta_c = c_t \Delta \dot{\theta}_{sc} + k_t \Delta \theta_{sc} - \frac{T_w}{G} + T_c$$

where $I_{arms}$ is the inertia of the arms; $I_{sw}$ is the inertia of the steering wheel; Ic is the inertia of the steering transmission (for instance, it represents the inertia of the rack and the front wheels with respect to the pinion, in the case of a rack-and-pinion steering transmission); ka is a stiffness coefficient representative of the elasticity of the tendons of the arms of the driver; kt and ct respectively are the steering column stiffness and the torsion bar damping; Csw and Ksw are the damping and self-centering stiffness with respect to the steering wheel axle.

Based on the predicted driver torque Tact, the muscle angle θa is calculated using the equation:

$$T_{act} = c_a \dot{\theta}_a + k_a ( \theta_a - \theta_{sw})$$

where $k_a$ is a stiffness term representing the elasticity of the tendons, and $c_a$ is a damping term.

Moreover, the road wheel angle is calculated proportionally to the steering angle column, with a steering gear ratio G:

$$\delta \ = \ \frac{\theta_c}{G}$$

The torque generated about the king-pin axes is (d being the pneumatic trail):

$$T_W \ = \ d \ F_{y,f}$$

A similar steering model is proposed by Ref.[1].

The central driving unit (CD)

The central driving unit CD is the core data processing unit of the ADAS system.
As in input, it is configured to acquire iteratively the values acquired by the different sensors of the set of sensors 120.
On this basis, at each time point tk, the central driving unit CD outputs different values, including a number of controls for vehicle 1.
Among the outputted values, at a time point tk, the central driving unit CD outputs a vector of one or more future reference vehicle state(s) $xv_r(k+i)$ of vehicle 1. These vehicle reference state(s) represent desired vehicle states xv(k+i) of vehicle 1 at successive time point(s) tk+i in the future.
Based on these values, if the prediction horizon of the MPC solver (described in more detail below) is Np, at a time point tk, the future time points at which the future system states are calculated are thus tk+1... tk+Np.
Depending on the implementation, the vehicle state xv(k) may comprise different variables. For instance, it may comprise the values of the position of the vehicle (longitudinal and lateral deviations x, y), of the heading angle $\psi$, and of the first and second derivatives thereof.

The Model-Predictive Control solver MPC

The ATCS system is implemented by a Model-Predictive Control solver MPC.
The MPC solver comprises an adaptative optimization unit AO and a Model-Predictive Control Prediction Unit PU.
The MPC solver is configured to execute the program P iteratively at successive control loops, which will be described below. The control loops are executed at successive time points tk, so as to output an assistive torque control value Tc at each time point tk. The value Tc calculated at a time point tk is transmitted to the steering actuator 132 so as to apply the calculated desired assistive torque to the steering unit 130 during or at the next time step.

A. The prediction unit PU

At each control loop, the adaptative optimization unit AO controls the prediction unit PU to predict a system state xs of the whole vehicle-driver system at the next time point tk+1.
As known per se, the general structure of the prediction model is:

$$xs(k + 1) = f\left(xs(k), \dot{T}c(k)\right)$$

Where xs(k) denotes the system state, and $\dot{T}c(k)$ is the assist torque rate at time tk, which is the control input of the MPC solver. By using the torque rate as a control input of the MPC solver, the value of the assistive torque Tc can be controlled.
In the present embodiment, the function f is implemented by the driver torque prediction unit DTP and the vehicle behavior prediction unit VBP.
The system state xs(k) is a vector of values which represents a state of the vehicle-driver system at a considered time point tk. The system state xs may comprise more or fewer values, depending on the vehicle-driver model chosen.

Terminology

In the present embodiment, the above-mentioned global system of coordinates is defined by axes $X_G$ and $Y_G$.

The local, road-aligned coordinate system is defined by axes $X_L$ and $Y_L$.

Reference variables (reference positions, etc.) are denoted by the subscript $_r$. For instance, the successive lateral positions along the reference trajectory of the vehicle are noted $e_{y,r}$.

The system state

The system state xs is the vector:

$$xs(k) = [\, y \; V_y \; \psi \; \dot{\psi} \; \theta_{sw} \dot{\theta}_{sw} \theta_{sc} \dot{\theta}_{sc} \theta_a x_{HAct} T_{act} e_{yd} \psi_d \theta_{ad} x_{KF} \; \gamma \; \; \alpha_r \; \alpha \; T_c \,]^T$$

That is, the system state xs comprises the following variables (these variables are relative to the vehicle or to the driver, depending on the context):

1) Driver-steering-vehicle variables:

| | |
|---|---|
| y | Lateral position (m) of the vehicle along axis $Y_G$; |
| Vy | Lateral velocity (m/s) (along lateral direction $F_Y$) |
| ip | Yaw angle (or Heading angle) of the vehicle (rad) |
| $\dot{\psi}$ | Yaw rate (rad/s) |
| $\theta sw$ | Steering wheel angle (rad) |
| $\dot{\theta}sw$ | Steering wheel rate of rotation (rad/s) |
| $\theta sc$ | Steering column angle (rad) |
| $\dot{\theta}sc$ | Steering column rate of rotation (rad/s) |
| $\theta a$ | Muscle angle of the arms of the driver (lumped) (rad) |

In this embodiment, the driver-steering-vehicle state xdsv is the vector composed of the above driver-steering-vehicle variables.

The driver-steering-vehicle state xdsv may include more of fewer variables than the variables listed above.

2) Driver activation dynamics variables:

TAct P    redicted driver torque (Nm)

3) Sensory-organs-delayed variables:

| | |
|---|---|
| ey | Lateral error (m): the difference (vector) between the lateral position y and the reference lateral position yr, perceived by the driver |
| $e_{yd}$ | Delayed lateral error (m) |
| $\psi_d$ | Delayed yaw angle (rad) |
| $\theta ad$ | Delayed muscle angle (rad) |

A delayed value of a variable at a considered time point represents the perceived value of the variable by the driver at the considered time point, taking into account the delays caused by his or her senses for human perception of the environment. The delayed value therefore represents the value of the variable at a past time point, the duration between that past time point and the current time point being equal to the perception delay of the driver.

4) Kalman filter variables:

$X_{KF}$    Vector of variables constituting the Kalman Filter state, estimated by the Kalman filter of the cognition unit CU.

The Kalman filter states comprise variables which are estimated based on the perceived state of the vehicle $x_{perceived}$ and an internal mental model that the driver has based on his/her skills & experience.

5) Expected (or ideal) Muscle angle-related variables:

$\gamma$     variable representative of the expected muscle angle of the driver (rad)

6) LQR - Driver control input-related variable:

$\alpha$     Variable representative of the expected driver torque (Nm)

7) Reflex Dynamics related variables:

$\alpha r$     Variable representative of the expected reflex torque, that is, the reflex torque applied by the muscle spindles of the driver's arms (Nm)

8) Control input relative variables:

Tc     the assistive torque (Nm)

In embodiments of the present method, an in particular in the present embodiment, the control variable of the MPC solver comprises the assistive torque control rate $\dot{T}c(k)$.

In some embodiments, additional control variable(s) may be taken into account as control variable(s) of the MPC solver.

The prediction function f realized by the prediction unit PU is a compound function realized by the driver torque prediction unit DTP and the vehicle behavior prediction unit VBP, combined within the MPC solver, which will now be described.

A more comprehensive description of the general background of the MPC framework, which can be used to implement the MPC solver of the present disclosure, can be found in Ref.[4] .

A.1 The driver torque prediction unit DTP

The driver torque prediction unit DTP is configured, based on the perceived state $x_{perceived}$ of the vehicle at a considered time point tk, to predict the driver torque Tact. This value Tact of the predicted driver torque is an estimated value of the torque applied by the driver to the steering wheel 131 at the considered time point tk.

In this embodiment, the driver torque prediction unit DTP predicts the driver torque Tact not only on the basis of $x_{perceived}$, but also on the basis of future reference vehicle state(s) $xv_r$ of the vehicle at least at the next time point, or possibly at the next subsequent time points over a time horizon, depending on the implementation.

A description of a driver torque prediction unit which can be used as a basis to implement a driver torque prediction unit according to the present disclosure can be found in Ref. [1].

In order to predict the driver torque, the driver torque prediction unit DTP comprises a sensory unit SU, a cognition unit CU and a neuromuscular response unit NR.

A.1.1. The sensory unit SU

The function of the sensory unit is to calculate perceived values of variables perceived by the driver, so as to take into account the perception delays caused by his or her sensory organs. These variables include in particular the variables of the perceived state $x_{perceived}$ of the vehicle.

The calculated delayed values are transmitted to the cognition unit CU.

A.1.2. The cognition unit CD

The function of the cognition unit CU is to calculate variables $\alpha$ and $\gamma$ representative of the intentions of the driver at the considered time point, on the basis of the information (s)he has, that is, the delayed vehicle state value $x_{perceived}$ outputted by the sensory unit SU.

$\alpha$ is a variable representative of the driver torque that the driver intends to apply to the steering wheel, while $\gamma$ is a variable representative of the expected muscle angle that the driver intends to apply to his or her arms, at the current time point tk.

The values of $\alpha$ and $\gamma$ are calculated with a Linear-Quadratic Regulator LQR on the basis predicted values $x_{KF}$ of the state of the vehicle, output by a Kalman filter KF.

A cognition unit capable of calculating such values $\alpha$ and $\gamma$ is for instance disclosed by Ref. [1].

However, in contrast with the cognition unit disclosed by Ref. [1], the cost function of the LQR regulator tends to minimize the differences between the vehicle state xv and the upcoming reference states $xv_r$ of the vehicle, over a chosen preview time. For instance, the cost function may minimize the lateral deviation ey of the vehicle with respect to the 'p' future points of upcoming reference trajectory $y_{r,p}$ of the vehicle on its lane.

Examples of cost functions that can be used by the Linear-Quadratic Regulator LQR are proposed by Ref. [2] and [3].

Finally, the variable $\alpha$ is calculated as:

$$\alpha = -K_{LQR} \cdot \begin{bmatrix} x_{KF} \\ y_{r,p} \end{bmatrix}$$

where $K_{LQR}$ is the LQR gain, $x_{KF}$ is a vector comprising the estimated variables derived from Ref. [1], and $y_{r,p}$ a vector containing the lateral position $y_r$ of the vehicle at the next 'p' time points, as predicted by the central driving unit CD.

The estimated variables of vector $x_{KF}$ accordingly include driver-steering-vehicle variables (including in particular the lateral reference target path), driver activation dynamics variables, and reflex dynamics related variables.

In addition, the variable $\gamma$ representative of the expected muscle angle is calculated based on the internal mental model of the driver and the estimated states by the Kalman filter KF.

A.1.3. The neuromuscular response unit

The function of the neuromuscular response unit NR is, based on the variables $\alpha$ and $\gamma$ outputted by the cognition unit CU, and based on the actual muscle angle of the $\theta a$, to predict the driver torque Tact(k) at the current time point tk.

The neuro-muscular response unit NR is the same as the neuro-muscular response unit proposed by Ref.[1]. Tact is calculated by an activation dynamics calculation unit ADC based on the sum of the variable $\alpha$ and of a value $\alpha r$ representative of the reflex torque and output by a reflex action calculation unit RAC on the basis of $\gamma$.

The neuromuscular response unit NR can be implemented on the basis of Ref. [1].

A.2 The vehicle behavior prediction unit VBP

In the prediction unit PU, after the driver torque prediction unit has predicted a driver torque Tact for the current step, the vehicle behavior prediction unit VBP predicts the behavior of the vehicle when the driver torque is applied to its steering wheel. The total torque applied to the steering wheel results from the combination of the driver torque DT(k), the assistive torque Tc(k) and the self-aligning torque Tw(k). The way these torques add up can be modelled differently depending how it is considered the torques are applied to the steering unit (in particular, in the present model, it is considered that the assistive torque Tc is applied to the steering column, not to the steering wheel).

Based on the vehicle model presented above, the vehicle behavior prediction unit VBP predicts the state xv(k+1) of the vehicle at the next time step based on the total torque applied to the steering wheel and the current state xv(k) of the vehicle.

B. The adaptive optimization unit AO

In the MPC solver, the adaptive optimization unit AO is configured, at each time point tk, to calculate optimal values of the assistive control torque to be applied by the actuator 132 to the steering column 133, so that the vehicle 1 follows the desired trajectory (as defined by the future reference system states $xs_r(tk+i)$ over the period tk+1... tk+Np, where Np is the prediction horizon).

These optimal values are calculated using a Model-Predictive Control algorithm.

According to such algorithm, the optimal future values of the assistive torque are calculated so as to optimize the steering of the vehicle, by minimizing a cost function subject to constraints. The optimization takes into account the system state xs(tk) at the start of the considered time window.

MPC is a finite-horizon optimal control approach that iteratively minimizes a cost function defined for a plant model (the vehicle-driver model) subject to constraints. At each time point tk, an optimal control sequence composed of system states xs(tk+1)... xs(tNp) within a horizon of Np time steps is computed, subject to constraints. However, only the first element of this sequence is applied to control the plant at the current time and this process will be repeated at the next time step tk+1 , leading to a receding horizon control strategy.

The length of this finite-time window is called the prediction horizon, Np. The control horizon of the control input sequence is set equal to the prediction horizon.

The MPC solver computes the optimal values in real-time, making it possible to integrate the driver's torque control behavior in the loop, thereby capturing the haptic interaction.

Since the MPC solver comprises a driver torque prediction unit, configured to accurately predict the driver torque, it is possible to optimize the control predicted by the MPC solver so as to determine optimal values optimized not only for safety, but also for the comfort of the driver.

In order to optimize safety, the cost function $J_{MPC}$ comprises terms that tend to minimize a difference, over a time horizon (tk+1...tk+Np), between the vehicle state of the vehicle xv and the reference vehicle state $xv_r$.

In addition, in order to optimize the comfort of the driver during driving, the cost function J may further be based on part or on all of the following additional terms:

- terms that tend to minimize, over the time horizon (tNp), a magnitude and/or a rate of change of the assistive torque Tc(k);
- terms that tend to minimize, over the time horizon (tNp), the magnitude of the predicted driver torque Tact(k) and/or of the predicted driver steering angle $\Theta_d$;
- terms that tend to minimize, over the time horizon (tNp), the difference between the assistive torque Tc(k) and the driver torque DT(k).

For instance, in the assistive torque calculation system ATCS of the present embodiment, the cost function for instance is defined as:

$$J_{MPC}(xs, Tc) = \sum_{k=0}^{N_p-1} \left( \left\| (xs\ (k) - xs_r(k) \right\|_{W_x}^2 + \left\| \dot{Tc}\ (k) - \dot{Tc}_r\ (k) \right\|_{W_{Tc}}^2 \right)$$

$$+ \left\| xs_{N_p} - xs_{r,N_p} \right\|_{W_{xN}}^2$$

where:

$W_x$, $W_{xN}$ are the weighting matrices of the stage and terminal cost for the states, which give more or less relative importance to the terms of the cost function.

$W_{Tc}$ is the stage cost for the input, that is, for the rate of the assistive torque Tc.

$xs_{r,k}$ is the system state reference vector at time tk

$\dot{Tc}(k)$ is the rate of the assistive torque at time point tk and $\dot{Tc}_r(k)$ is the corresponding reference value.

The system state reference vector $xs_r$ which, for each variable, defines the desired value of the variable, is defined based on the systems requirements and the goal of the assistive torque calculation method.

In the above cost function $J_{MPC}$, first of all, the tracking performance objective is usually to minimize the lateral deviation $e_y$ with respect to the reference trajectory $y_r$. This reference trajectory is normally defined as the lane centerline CL of the driving vehicle lane, which means that the reference position $y_r$ of the vehicle is at the center of the lane.

The optimization performed by the MPC solver is preferably performed (depending on the considered variables) only within a look-ahead distance from the vehicle, for instance depending on the vehicle velocity and the heading angle $\psi$.

Since the optimization performed by the MPC solver is based on many variables (the variables taken into account in the cost function $J_{MPC}$) and not just the lateral deviation, the optimal torque calculated by the MPC solver results in a vehicle lateral position y which is very often at the center of lane, but in some cases is only close to it, because the MPC solver also takes into account other variables, e.g. the driver intention etc.

In practice, most variables of the reference system state $xs_r$ are often set to 0, in order to minimize the magnitude of these variables.

Regarding the assistive torque Tc, the reference assistive torque can be either zero or the real driver torque DT(k).

Moreover, the driving comfort is enhanced through weights which bear on the lateral velocity Vy and the yaw rate $\dot{\psi}$.

The cost function $J_{MPC}$ can also include terms related to the driver's effort or discomfort so as to reduce the activation of the muscle spindles' torque or the total driver steering torque and consequently, so as to improve the driver's comfort during driving.

In addition, in order to better capture the specific needs or specific driving features of each driver, the cost function is adaptive. The algorithm indeed is tuned to the driver by changing the above-mentioned weights of the cost function. This dynamic adaptation aims at minimising conflicts between the applied driver torque DT and the assistive torque Tc, as well as dynamically sharing the control authority.

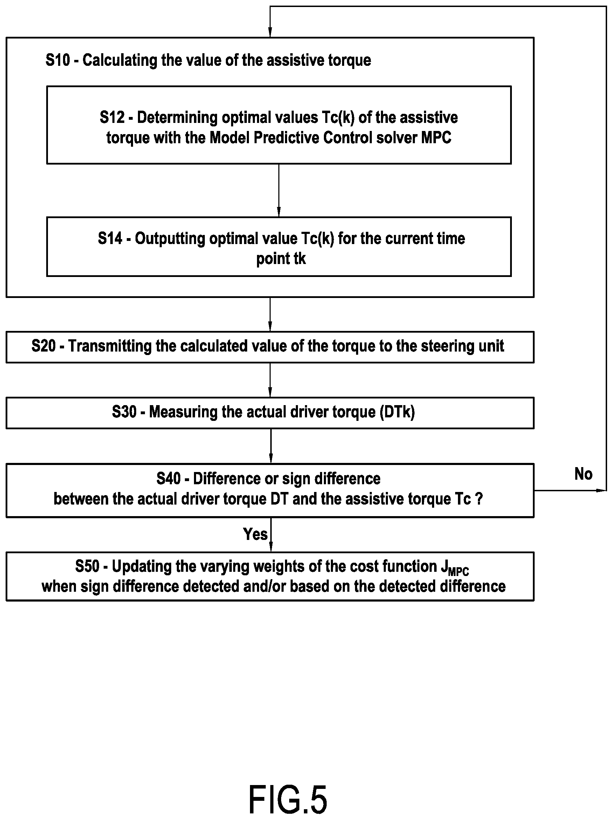

In this purpose, the calculation method is performed as follows (In reference to Fig.5).

During normal driving of the vehicle by the driver, the following steps are carried out iteratively:

S10) calculating a value of an assistive torque by the assistive torque calculation method described above. This includes, in the present embodiment:

S12) determining optimal values (Tc(k)) of the assistive torque over a time horizon (Np) by minimizing the cost function ($J_{MPC}$), based on desired reference states $xs_{r,k}$ of the vehicle at future time point(s) (tk+1...tk+Np), using the Model Predictive Control solver MPC;
S14) outputting the optimal value (Tc) determined for the next time point (tk+1).

S20) transmitting the calculated value Tc(k+1) of the assistive torque to the steering unit of the vehicle; upon receiving the calculated value of the assistive torque, the steering unit 130 controls its actuator 132 to apply the assistive torque having the calculated value Tc to the steering column 133. The steering unit 130 is further configured so that the driver receives via the steering wheel 131 a haptic feedback on the assistive torque Tc applied by the actuator 132.
S30) the actual driver torque (DTk) is measured by the torque meter 123;
S40) it is detected whether there is a sign difference between the actual driver torque DTk and the assistive torque Tck, and/or detecting the difference between these two torques values (detecting a difference' means herein measuring the value of the difference).

If no difference is detected, the algorithm starts back at step S10 at the next time step.

Conversely, if a difference and/or a sign difference is detected, it is concluded that some conflict exists between the assistive torque and the torque applied by the driver has been detected; consequently, a step S50 is executed:

S50) the weights of the cost function $J_{MPC}$ are adapted, in order to find a more appropriate level of authority between the driver and the ATCS system.

In most embodiments, step S50 is triggered at step S40 when a difference between the two torques is detected only if said difference is above a threshold.

At step S50, the weights are adapted based on the sign difference and/or based on the difference between the actual driver torque (DTk) and the assistive torque.

The new weights can be found using a predetermined look-up table in which possible values of the weights of the cost function $J_{MPC}$ are recorded. The adaptation of the weights is preferably carried out in a smooth way to avoid any abrupt torque feedback to the driver.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A computer-implemented assistive torque calculation method for calculating an assistive torque (Tc) to be applied to a steering unit (130) of a vehicle by a driver assistance system (ADAS) of the vehicle, in addition to a driver torque (DTk) applied to the steering unit by a driver (D) of the vehicle (1),
the method comprising steps of:

S12) determining optimal values (Tc(k)) of the assistive torque over a time horizon (Np) by minimizing a cost function ($J_{MPC}$), based on desired reference system states ($xs_{r,k}(j)$) of the vehicle-driver system at future time point(s) (tk+1...tk+Np), using a Model Predictive Control solver (MPC); and

S14) outputting the optimal value (Tc(k+1)) determined for the next time point (tk+1); wherein
the steering torque (ST(k)) for orienting wheel(s) of the vehicle results at least from the driver torque (DT(k)) and the assistive torque (Tc(k));
the MPC solver (MPC) determines the optimal values using a prediction unit (PU) comprising a driver torque prediction unit (DTP) and a vehicle behaviour prediction unit (VBP);
the assistive torque calculation method being **characterized in that**
the driver torque prediction unit (DTP) is configured to calculate a predicted driver torque (Tact) based at least on a perceived state ($x_{perceived}$) of the vehicle related to a position of the vehicle, and on one or more reference vehicle state(s) ($xv_r(i+1)...$) of the vehicle at one or more future time points (ti+1...);
the vehicle behaviour prediction unit (VBP) being configured, based on the predicted driver torque (Tact) and on a measured driver-steering-vehicle state (xdsv(i)...xdsv(k)) of the vehicle for a current time point (tk), to output an estimated driver-steering-vehicle state (xdsv(k+1)) of the driver-vehicle system at the next time point (tk+1);
the driver torque prediction unit (DTP) comprises a sensory unit (SU), a cognition unit (CU) and a neuromuscular response unit (NR);
the sensory unit (SU) is configured to calculate the perceived state ($x_{perceived}$) of the vehicle,
the cognition unit is configured, based on the perceived state of the vehicle ($x_{perceived}$), to calculate a value ($\alpha$) representative of an expected driver torque and a value ($\gamma$) representative of an expected muscle angle of the arms of the driver, for the current time point (tk);
the neuromuscular response unit (NR) is configured, based on said value ($\alpha$) representative of the expected driver torque and said value ($\gamma$) representative of the expected muscle angle of the arms of the driver, and on the current value of the muscle angle ($\Theta a$) of the arms of the driver, to calculate the predicted driver torque (Tact(k+1)) at the next time point (tk+1).

2. The assistive torque calculation method according to claim 1, wherein the cost function ($J_{MPC}$) comprises terms that tends to minimize a difference, over a time horizon (tNp), between component(s) of the system state (xs) and reference values ($xs_r$) for said component(s).

3. The assistive torque calculation method according to claim 2, wherein the terms of the cost function ($J_{MPC}$) are based on at least one of vehicle-related component(s), driver-comfort related component(s), driver-activity related component(s), and assistive-torque-related component(s), of the system state (xs).

4. An assistive torque calculation method according to any one of claims 1 to 3, wherein

the cognition unit (CU) comprises a Kalman filter (KF) and an optimal controller (LQR);
the Kalman filter (KF) is configured, based on the perceived state ($x_{perceived}$) of the vehicle at the current time point (tk) and on the value ($\alpha$) representative of the driver torque expected at a prior time point (tk-1), to calculate an estimate ($\hat{x}_{KF}$) of a state of the vehicle;
the optimal controller (LQR) is configured, based on the state estimate ($\hat{x}_{KF,k}$) at the current time point (tk) calculated by the Kalman filter (KF), to calculate a value of the variable ($\alpha$) representative of the expected driver torque for the current time point (tk) by minimizing a cost function ($J_{LQR}$).

5. An assistive torque calculation method according to claim 4, wherein
the optimal controller (OC) is a linear quadratic regulator (LQR) or a model predictive control (MPC).

6. An assistive torque calculation method according to any one of claims 1 to 5, wherein the neuromuscular response unit (NR) is configured:

to calculate a value ($\alpha_r$) representative of a reflex torque based on the value ($\gamma$) representative of an expected muscle angle of the arms of the driver and on the current value of the muscle angle ($\Theta a$); and
to calculate the driver torque (Tact) at the current time point (tk) based on the values ($\alpha, \alpha_r$) representative respectively of the expected driver torque and of the reflex torque.

7. An assistive torque calculation method according to any one of claims 1 to 6, wherein

the cost function ($J_{MPC}$) is an adaptive cost function with varying weights, and
the assistive torque calculation method further comprises:

S30) measuring the actual driver torque (DTk);

S40) detecting a difference and/or a sign difference between the actual driver torque (DTk) and the assistive torque (Tck);

S50) updating the varying weights of the cost function ($J_{MPC}$) when the sign difference has been detected and/or based on the difference between the actual driver torque (DTk) and the assistive torque (Tck).

8. A driver assistance method for assisting a driver of a vehicle, wherein the method comprises iteratively, while the vehicle is being driven by the driver:

S10) calculating a value of an assistive torque (Tc) by an assistive torque calculation method according to any one of claims 1 to 7; and

S20) transmitting the calculated value of the assistive torque to a steering unit (130) of the vehicle; and wherein, upon receiving the calculated value of the assistive torque, the steering unit controls an actuator (132) of the steering unit (130) to apply a torque having the calculated value to the steering column (133) of the vehicle, the steering unit being configured so that the driver receives a haptic feedback on the torque applied by the actuator (132).

9. A driver assistance method according to claim 8, wherein the method is executed continuously while the vehicle is being driven by the driver.

10. One or more computer program(s) comprising instructions which, when the instructions are executed by a computer, cause the computer to carry out the steps of a method according to any one of claims 1 to 9.

11. A non-transitory computer readable medium, having the one or more computer program(s) according to claim 10 stored thereon.

12. A computer-implemented assistive torque calculation system (ATCS) for calculating an assistive torque (Tc(k)) to be applied to a steering unit of a vehicle by a driver assistance system (ADAS) of the vehicle; the assistive torque calculation system (ATCS) comprising one or more processors and a computer-readable medium;

the computer-readable medium comprising computer instructions stored therein, wherein the instructions, when executed by the one or more processors, cause the one or more processors to carry out the steps of an assistive torque calculation method according to any one of claims 1 to 7.

13. An advanced driver assistance system (ADAS), comprising one or more processors and a computer-readable medium;

the computer-readable medium comprising computer instructions stored therein, wherein the instructions, when executed by the one or more processors, cause the one or more processors to carry out the steps of the driver assistance method according to claim 8 or 9.

14. A vehicle (1) comprising an assistive torque calculation system according to claim 12 or an advanced driver assistance system (ADAS) according to claim 13.

**Patentansprüche**

1. Computerimplementiertes Verfahren zur Berechnung eines unterstützenden Drehmoments zum Berechnen eines unterstützenden Drehmoments (Tc), das auf eine Lenkeinheit (130) eines Fahrzeugs durch ein Fahrer-Assistenzsystem (ADAS) des Fahrzeugs aufgebracht werden soll, zusätzlich zu einem Fahrer-Drehmoment (DTk), das auf die Lenkeinheit durch einen Fahrer (D) des Fahrzeugs (1) aufgebracht wird,

wobei das Verfahren die Schritte umfasst des:

S12) Bestimmens von optimalen Werten (Tc(k)) für das unterstützende Drehmoment über einen Zeithorizont (Np) durch Minimieren einer Kostenfunktion ($J_{MPC}$), auf Grundlage von gewünschten Referenz-Systemzuständen ($xs_{r,k}(j)$) des Fahrzeug-Fahrersystems an einem oder mehreren zukünftigen Zeitpunkten (tk+1...tk+Np), unter Verwendung eines Lösers durch modellbasierte prädiktive Regelung (MPC), und

S14) Ausgebens des optimalen Werts (Tc(k+1)), der für den nächsten Zeitpunkt (tk+1) bestimmt wird, wobei das Lenkdrehmoment (ST(k)) für die Orientierung von einem oder mehreren Rädern des Fahrzeugs sich zumindest aus dem Fahrer-Drehmoment (DT(k)) und dem unterstützenden Drehmoment (Tc(k)) ergibt,

der MPC-Löser (MPC) die optimalen Werte unter Verwendung einer Vorhersageeinheit (PU) bestimmt, die eine Fahrer-Drehmoment-Vorhersageeinheit (DTP) und eine Fahrzeugverhalten-Vorhersageeinheit (VBP) umfasst, wobei das Verfahren zur Berechnung eines unterstützenden Drehmoments **dadurch gekennzeichnet ist, dass** die Fahrer-Drehmoment-Vorhersageeinheit (DTP) dazu ausgestaltet ist, ein vorhergesagtes Fahrer-Drehmoment (Tact) zumindest auf Grundlage eines wahrgenommenen Zustands ($x_{perceived}$) des Fahrzeugs relativ zu einer Position des Fahrzeugs und eines oder mehrerer Referenz-Fahrzeugzustände ($xv_r(i+1) ...$) des Fahrzeugs an dem einen oder den mehreren zukünftigen Zeitpunkten ($ti+1 ...$) zu berechnen, wobei die Fahrzeugverhalten-Vorhersageeinheit (VBP) dazu ausgestaltet ist, auf Grundlage des vorhergesagten Fahrer-Drehmoments (Tact) und eines gemessenen Fahrer-Lenkungs-Fahrzeug-Zustands ($xdsv(i) ... xdsv(k)$) des Fahrzeugs für einen aktuellen Zeitpunkt (tk) einen geschätzten Fahrer-Lenkungs-Fahrzeug-Zustand ($xdsv(k+1)$) des Fahrer-Fahrzeugsystems an dem nächsten Zeitpunkt (tk+1) auszugeben, die Fahrer-Drehmoment-Vorhersageeinheit (DTP) eine Wahrnehmungseinheit (SU), eine Kognitionseinheit (CU) und eine neuromuskuläre Reaktionseinheit (NR) umfasst, die Wahrnehmungseinheit (SU) dazu ausgestaltet ist, den wahrgenommenen Zustand ($x_{perceived}$) des Fahrzeugs zu berechnen, die Kognitionseinheit dazu ausgestaltet ist, auf Grundlage des wahrgenommenen Zustands des Fahrzeugs ($x_{perceived}$) für den aktuellen Zeitpunkt (tk) einen Wert (a), der ein erwartetes Fahrer-Drehmoment darstellt, und einen Wert ($\gamma$) zu berechnen, der einen erwarteten Muskelwinkel der Arme des Fahrers darstellt, die neuromuskuläre Reaktionseinheit (NR) dazu ausgestaltet ist, auf Grundlage des Werts (a), der das erwartete Fahrer-Drehmoment darstellt, und des Werts ($\gamma$), der den erwarteten Muskelwinkel der Arme des Fahrers darstellt, und des aktuellen Werts des Muskelwinkels ($\theta a$) der Arme des Fahrers das vorhergesagte Fahrer-Drehmoment (Tact(k+1)) an dem nächsten Zeitpunkt (tk+1) zu berechnen.

2. Verfahren zur Berechnung eines unterstützenden Drehmoments nach Anspruch 1, wobei die Kostenfunktion ($J_{MPC}$) Terme umfasst, die tendenziell eine Differenz über einen Zeithorizont (tNp) zwischen einer oder mehreren Komponenten des Systemzustands (xs) und den Referenzwerten ($xs_r$) für die eine oder die mehreren Komponenten minimieren.

3. Verfahren zur Berechnung eines unterstützenden Drehmoments nach Anspruch 2, wobei die Terme der Kostenfunktion ($J_{MPC}$) zumindest auf einem von einer oder mehreren das Fahrzeug betreffenden Komponenten, den Fahrerkomfort betreffenden Komponenten, die Fahreraktivität betreffenden Komponenten und das unterstützende Drehmoment betreffenden Komponenten des Systemzustands (xs) basieren.

4. Verfahren zur Berechnung eines unterstützenden Drehmoments nach einem der Ansprüche 1 bis 3, wobei

die Kognitionseinheit (CU) ein Kalman-Filter (KF) und einen optimalen Regler (LQR) umfasst,
das Kalman-Filter (KF) dazu ausgestaltet ist, auf Grundlage des wahrgenommenen Zustands ($x_{perceived}$) des Fahrzeugs an dem aktuellen Zeitpunkt (tk) und des Werts ($\alpha$), der das Fahrer-Drehmoment darstellt, das an einem früheren Zeitpunkt (tk-1) erwartet wurde, eine Schätzung ($\hat{x}_{KF}$) eines Zustands des Fahrzeugs zu berechnen,
der optimale Regler (LQR) dazu ausgestaltet ist, auf Grundlage der Zustandsschätzung ($\hat{x}_{KF,k}$) an dem aktuellen Zeitpunkt (tk), der durch das Kalman-Filter (KF) berechnet wurde, einen Wert der Variablen ($\alpha$), der das erwartete Fahrer-Drehmoment für den aktuellen Zeitpunkt (tk) darstellt, durch Minimieren einer Kostenfunktion ($J_{LQR}$) zu berechnen.

5. Verfahren zur Berechnung eines unterstützenden Drehmoments nach Anspruch 4, wobei der optimale Regler (OC) ein linear-quadratischer Regler (LQR) oder eine modellbasierte prädiktive Regelung (MPC) ist.

6. Verfahren zur Berechnung eines unterstützenden Drehmoments nach einem der Ansprüche 1 bis 5, wobei die neuromuskuläre Reaktionseinheit (NR) dazu ausgestaltet ist:

einen Wert ($\alpha_r$), der ein Reflexdrehmoment darstellt, auf Grundlage des Werts ($\gamma$), der einen erwarteten Muskelwinkel der Arme des Fahrers darstellt, und des aktuellen Werts des Muskelwinkels ($\theta a$) zu berechnen, und
das Fahrer-Drehmoment (Tact) an dem aktuellen Zeitpunkt (tk) auf Grundlage der Werte ($\alpha$, $\alpha_r$), die jeweils das erwartete Fahrer-Drehmoment und das Reflexdrehmoment darstellen, zu berechnen.

7. Verfahren zur Berechnung eines unterstützenden Drehmoments nach einem der Ansprüche 1 bis 6, wobei

die Kostenfunktion ($J_{MPC}$) eine adaptive Kostenfunktion mit variierenden Gewichtungen ist, und das Verfahren zur Berechnung eines unterstützenden Drehmoments ferner umfasst:

S30) Messen des tatsächlichen Fahrer-Drehmoments (DTk),
S40) Erfassen einer Differenz und/oder einer Vorzeichen-Differenz zwischen dem aktuellen Fahrer-Drehmoment (DTk) und dem unterstützenden Drehmoment (Tck),
S50) Aktualisieren der variierenden Gewichtungen der Kostenfunktion ($J_{MPC}$), wenn die Vorzeichen-Differenz erfasst wurde, und/oder auf Grundlage der Differenz zwischen dem tatsächlichen Fahrer-Drehmoment (DTk) und dem unterstützenden Drehmoment (Tck).

8. Fahrer-Assistenz-Verfahren zum Assistieren eines Fahrers eines Fahrzeugs, wobei das Verfahren umfasst, während das Fahrzeug von dem Fahrer gefahren wird, iterativ:

S10) einen Wert eines unterstützenden Drehmoments (Tc) durch ein Verfahren zur Berechnung eines unterstützenden Drehmoments nach einem der Ansprüche 1 bis 7 zu berechnen, und
S20) den berechneten Wert für das unterstützende Drehmoment an eine Lenkeinheit (130) des Fahrzeugs zu übertragen, und wobei,
nach Erhalt des berechneten Werts des unterstützenden Drehmoments die Lenkeinheit ein Stellglied (132) der Lenkeinheit (130) so steuert, dass es ein Drehmoment, das den berechneten Wert aufweist, auf die Lenksäule (133) des Fahrzeugs aufbringt, wobei die Lenkeinheit so ausgestaltet ist, dass der Fahrer eine haptische Rückkoppelung über das durch das Stellglied (132) aufgebrachte Drehmoment erhält.

9. Fahrer-Assistenz-Verfahren nach Anspruch 8, wobei das Verfahren kontinuierlich ausgeführt wird, während das Fahrzeug von dem Fahrer gefahren wird.

10. Ein oder mehrere Computerprogramme, umfassend Anweisungen, die, wenn die Anweisungen durch einen Computer ausgeführt werden, den Computer veranlassen, die Schritte eines Verfahrens nach einem der Ansprüche 1 bis 9 auszuführen.

11. Nicht transitorisches, computerlesbares Medium, das darauf das eine oder die mehreren Computerprogramme nach Anspruch 10 gespeichert hat.

12. Computerimplementiertes System zur Berechnung eines unterstützenden Drehmoments (ATCS) zum Berechnen eines unterstützenden Drehmoments (Tc(k)), das auf eine Lenkeinheit eines Fahrzeugs durch ein Fahrer-Assistenzsystem (ADAS) des Fahrzeugs aufgebracht werden soll, wobei das System zur Berechnung eines unterstützenden Drehmoments (ATCS) einen oder mehrere Prozessoren und ein computerlesbares Medium umfasst, wobei das computerlesbare Medium darauf gespeicherte Computeranweisungen umfasst, wobei die Anweisungen, wenn sie durch den einen oder die mehreren Prozessoren ausgeführt werden, den einen oder die mehreren Prozessoren veranlassen, die Schritte eines Verfahrens zur Berechnung eines unterstützenden Drehmoments nach einem der Ansprüche 1 bis 7 auszuführen.

13. Erweitertes Fahrer-Assistenzsystem (ADAS), umfassend einen oder mehrere Prozessoren und ein computerlesbares Medium,
wobei das computerlesbare Medium darauf gespeicherte Computeranweisungen umfasst, wobei die Anweisungen, wenn sie durch den einen oder die mehreren Prozessoren ausgeführt werden, den einen oder die mehreren Prozessoren veranlassen, die Schritte des Fahrer-Assistenz-Verfahrens nach Anspruch 8 oder 9 auszuführen.

14. Fahrzeug (1), umfassend ein System zur Berechnung eines unterstützenden Drehmoments nach Anspruch 12 oder ein erweitertes Fahrer-Assistenzsystem (ADAS) nach Anspruch 13.

**Revendications**

1. Procédé de calcul de couple d'assistance mis en oeuvre par ordinateur pour calculer un couple d'assistance (Tc) devant être appliqué sur une unité de direction (130) d'un véhicule par un système d'assistance de conducteur (ADAS) du véhicule, en plus d'un couple de conducteur (DTk) appliqué sur l'unité de direction par un conducteur (D) du véhicule (1),
le procédé comprenant des étapes de :

S12) détermination de valeurs optimales (Tc(k)) du couple d'assistance sur un horizon de temps (Np) en minimisant une fonction de coût ($J_{MPC}$), sur la base d'états de système de référence souhaités ($xs_{r,k}$(j)) du système véhicule-conducteur en un ou des instants futurs (tk+1...tk+Np), en utilisant un résolveur à contrôle prédictif par modèle (MPC) ; et

S14) production de la valeur optimale (Tc(k+1)) déterminée pour l'instant suivant (tk+1) ; selon lequel

le couple de direction (ST(k)) pour orienter une ou des roues du véhicule résulte au moins du couple de conducteur (DT(k)) et du couple d'assistance (Tc(k)) ;

le résolveur MPC (MPC) détermine les valeurs optimales en utilisant une unité de prédiction (PU) comprenant une unité de prédiction de couple de conducteur (DTP) et une unité de prédiction de comportement de véhicule (VBP) ;

le procédé de calcul de couple d'assistance étant **caractérisé en ce que**

l'unité de prédiction de couple de conducteur (DTP) est configurée pour calculer un couple de conducteur prédit (Tact) sur la base au moins d'un état perçu ($x_{perceived}$) du véhicule lié à une position du véhicule, et d'un ou plusieurs états de véhicule de référence ($xv_r$(i+1)...) du véhicule en un ou plusieurs instants futurs (ti+1...) ;

l'unité de prédiction de comportement de véhicule (VBP) étant configurée, sur la base du couple de conducteur prédit (Tact) et d'un état conducteur-direction-véhicule mesuré (xdsv(i)...xdsv(k)) du véhicule pour un instant courant (tk), pour produire un état conducteur-direction-véhicule estimé (xdsv(k+1)) du système conducteur-véhicule à l'instant suivant (tk+1) ;

l'unité de prédiction de couple de conducteur (DTP) comprend une unité sensorielle (SU), une unité cognitive (CU) et une unité de réponse neuromusculaire (NR) ;

l'unité sensorielle (SU) est configurée pour calculer l'état perçu ($x_{perceived}$) du véhicule ;

l'unité cognitive est configurée, sur la base de l'état perçu du véhicule ($x_{perceived}$), pour calculer une valeur ($\alpha$) représentative d'un couple de conducteur attendu et une valeur ($\gamma$) représentative d'un angle de muscle attendu des bras du conducteur, pour l'instant courant (tk) ;

l'unité de réponse neuromusculaire (NR) est configurée, sur la base de ladite valeur ($\alpha$) représentative du couple de conducteur attendu et de ladite valeur ($\gamma$) représentative de l'angle de muscle attendu des bras du conducteur, et de la valeur courante de l'angle de muscle ($\theta$a) des bras du conducteur, pour calculer le couple de conducteur prédit (Tact(k+1)) à l'instant suivant (tk+1).

2. Procédé de calcul de couple d'assistance selon la revendication 1, selon lequel la fonction de coût ($J_{MPC}$) comprend des termes qui tendent à minimiser une différence, sur un horizon de temps (tNp), entre une ou des composantes de l'état du système (xs) et des valeurs de référence ($xs_r$) pour la ou lesdites composantes.

3. Procédé de calcul de couple d'assistance selon la revendication 2, selon lequel les termes de la fonction de coût ($J_{MPC}$) sont basés sur au moins une d'une ou de composantes liées au véhicule, d'une ou de composantes liées au confort de conducteur, d'une ou de composantes liées à l'activité de conducteur, et d'une ou de composantes liées au couple d'assistance, de l'état du système (xs).

4. Procédé de calcul de couple d'assistance selon l'une quelconque des revendications 1 à 3, selon lequel

l'unité cognitive (CU) comprend un filtre de Kalman (KF) et un contrôleur optimal (LQR) ;

le filtre de Kalman (KF) est configuré, sur la base de l'état perçu ($x_{perceived}$) du véhicule à l'instant courant (tk) et de la valeur ($\alpha$) représentative du couple de conducteur attendu à un instant antérieur (tk-1), pour calculer une estimation ($\hat{X}_{KF}$) d'un état du véhicule ;

le contrôleur optimal (LQR) est configuré, sur la base de l'estimation d'état ($\hat{X}_{KF,k}$) à l'instant courant (tk) calculée par le filtre de Kalman (KF), pour calculer une valeur de la variable ($\alpha$) représentative du couple de conducteur attendu pour l'instant courant (tk) en minimisant une fonction de coût ($J_{LQR}$).

5. Procédé de calcul de couple d'assistance selon la revendication 4, selon lequel
le contrôleur optimal (OC) est un régulateur quadratique linéaire (LQR) ou un contrôle prédictif par modèle (MPC).

6. Procédé de calcul de couple d'assistance selon l'une quelconque des revendications 1 à 5, selon lequel l'unité de réponse neuromusculaire (NR) est configurée :

pour calculer une valeur ($\alpha$r) représentative d'un couple de réflexe sur la base de la valeur ($\gamma$) représentative d'un angle de muscle attendu des bras du conducteur et de la valeur courante de l'angle de muscle ($\theta$a) ; et
pour calculer le couple de conducteur (Tact) à l'instant courant (tk) sur la base des valeurs ($\alpha$, $\alpha$r) représentatives respectivement du couple de conducteur attendu et du couple de réflexe.

**7.** Procédé de calcul de couple d'assistance selon l'une quelconque des revendications 1 à 6, selon lequel

la fonction de coût ($J_{MPC}$) est une fonction de coût adaptative avec des pondérations variables, et
le procédé de calcul de couple d'assistance comprend en outre :

S30) mesure du couple de conducteur réel (DTk) ;
S40) détection d'une différence et/ou d'une différence de signe entre le couple de conducteur réel (DTk) et le couple d'assistance (Tck) ;
S50) mise à jour des pondérations variables de la fonction de coût ($J_{MPC}$) quand la différence de signe a été détectée et/ou sur la base de la différence entre le couple de conducteur réel (DTk) et le couple d'assistance (Tck).

**8.** Procédé d'assistance de conducteur pour assister un conducteur d'un véhicule, selon lequel le procédé comprend de manière itérative, alors que le véhicule est conduit par le conducteur :

S10) calcul d'une valeur d'un couple d'assistance (Tc) par un procédé de calcul de couple d'assistance selon l'une quelconque des revendications 1 à 7 ; et
S20) transmission de la valeur calculée du couple d'assistance à une unité de direction (130) du véhicule ; et selon lequel,
lors de la réception de la valeur calculée du couple d'assistance, l'unité de direction commande un dispositif d'actionnement (132) de l'unité de direction (130) pour appliquer un couple ayant la valeur calculée sur la colonne de direction (133) du véhicule, l'unité de direction étant configurée de telle sorte que le conducteur reçoit une rétroaction haptique sur le couple appliqué par le dispositif d'actionnement (132).

**9.** Procédé d'assistance de conducteur selon la revendication 8, selon lequel le procédé est exécuté de manière continue alors que le véhicule est conduit par le conducteur.

**10.** Un ou plusieurs programmes informatiques comprenant des instructions qui, quand les instructions sont exécutées par un ordinateur, amènent l'ordinateur à mettre en oeuvre les étapes d'un procédé selon l'une quelconque des revendications 1 à 9.

**11.** Support lisible par ordinateur non-transitoire, ayant le ou les programmes informatiques selon la revendication 10 stockés dessus.

**12.** Système de calcul de couple d'assistance mis en oeuvre par ordinateur (ATCS) pour calculer un couple d'assistance (Tc(k)) devant être appliqué sur une unité de direction d'un véhicule par un système d'assistance de conducteur (ADAS) du véhicule ; le système de calcul de couple d'assistance (ATCS) comprenant un ou plusieurs processeurs et un support lisible par ordinateur ;
le support lisible par ordinateur comprenant des instructions d'ordinateur stockées dessus, selon lequel les instructions, lorsqu'elles sont exécutées par le un ou les processeurs, amènent le un ou les processeurs à mettre en oeuvre les étapes d'un procédé de calcul de couple d'assistance selon l'une quelconque des revendications 1 à 7.

**13.** Système d'assistance de conducteur avancé (ADAS), comprenant un ou plusieurs processeurs et un support lisible par ordinateur ;
le support lisible par ordinateur comprenant des instructions d'ordinateur stockées dessus, selon lequel les instructions, lorsqu'elles sont exécutées par le un ou les processeurs, amènent le un ou les processeurs à mettre en oeuvre les étapes du procédé d'assistance de conducteur selon la revendication 8 ou 9.

**14.** Véhicule (1) comprenant un système de calcul de couple d'assistance selon la revendication 12 ou un système d'assistance de conducteur avancé (ADAS) selon la revendication 13.

FIG.1

FIG.2

FIG.3

EP 4 052 995 B1

FIG.4

S10 - Calculating the value of the assistive torque

S12 - Determining optimal values Tc(k) of the assistive torque with the Model Predictive Control solver MPC

S14 - Outputting optimal value Tc(k) for the current time point tk

S20 - Transmitting the calculated value of the torque to the steering unit

S30 - Measuring the actual driver torque (DTk)

S40 - Difference or sign difference between the actual driver torque DT and the assistive torque Tc ?

No

Yes

S50 - Updating the varying weights of the cost function $J_{MPC}$ when sign difference detected and/or based on the detected difference

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9278713 B2

**Non-patent literature cited in the description**

- **T. NIU ; D. COLE.** A model of driver steering control incorporating steering torque feedback and state estimation. Department of Engineering, University Cambridge, Tech. Rep, 2020
- **C. J. NASH ; D. J. COLE.** Identification and validation of a driver steering control model incorporating human sensory dynamics. *Vehicle System Dynamics,* 2020, vol. 58 (4), 495-517

- **R. S. SHARP ; V. VALTETSIOTIS.** Optimal preview car steering control. *Vehicle System Dynamics,* 2001, vol. 35, 101-117
- **WANG, L.** Model Predictive Control System Design and Implementation Using MATLAB. Springer, 2009
- **RAJAMANI, R.** Vehicle dynamics and control. Springer, 2012